# EUROPÄISCHE PATENTSCHRIFT

(11) **EP 2 455 169 B1**
(45) Veröffentlichungstag und Bekanntmachung des Hinweises auf die Patenterteilung: **12.12.2012**
(21) Anmeldenummer: 11189548.8
(22) Anmeldetag: 17.11.2011
(51) Int. Cl.: B21D 11/08, B21D 13/10, B21D 22/02, B29C 51/08, B44C 1/24

(54) **Verfahren zum Umformen eines plattenförmigen Materials in ein dreidimensionales Objekt**
Method for reshaping a plate-shaped material into a three-dimensional object
Procédé de transformation d'un matériau en forme de plaque en un objet tridimensionnel

(30) Priorität: 17.11.2010 DE 102010044074
(43) Veröffentlichungstag der Anmeldung: 23.05.2012
(73) Patentinhaber: Steelworks GmbH & Co. KG, 46325 Borken (DE)
(72) Erfinder: Reining, Thomas, 46325 Borken (DE)
(74) Vertreter: Linnemann, Winfried

(56) Entgegenhaltungen:
- WO-A1-2004/009262
- WO-A1-2005/058521
- DE-A1-102009 056 324
- DE-C1- 19 621 942
- GB-A- 2 197 810
- US-A1- 2007 044 529

## Beschreibung

Die vorliegende Erfindung betrifft ein Verfahren zum Umformen eines plattenförmigen Materials in ein dreidimensionales Objekt, wobei das Material auf einer Matrize durch Ausüben von Druck auf eine der Matrize abgewandte Seite des plattenförmigen Materials umgeformt wird.

Zur Herstellung von beispielsweise Strukturblechen, geprägten oder gestanzten Blechen oder Lochgitterblechen ist es aus der Praxis allgemein und lange bekannt, diesen plattenförmigen Blechen durch ein Umformverfahren die gewünschte Formgebung und Struktur zu verleihen. Dabei wird das umzuformende Blech zwischen eine negative Matrize und eine positive Patrize eingelegt und diese werden dann unter Druck zusammengepresst. Der Pressvorgang kann beispielsweise durch eine hydraulische oder mechanische Presse erzeugt werden. In gleicher Weise kann ein Blechzuschnitt zwischen entsprechend an ihrer Oberflache dreidimensional gemusterten Walzen durch deren Drehbewegung eingezogen und unter Druck umgeformt werden.

Weiterhin ist zum Umformen von plattenförmigen Blechen als neueres Umformverfahren das Fluid-Tiefziehen bekannt, welches beispielsweise in der DE 10 2006 052 696 B4 beschrieben ist. Dabei wird ein Blechzuschnitt auf eine entsprechend strukturierte Matrize aufgelegt. Auf die der Matrize abgewandten Seite des Blechzuschnitts wird durch ein Fluid, wie Flüssigkeit oder Gas, vollflächig ein Druck auf den Blechzuschnitt ausgeübt, so dass sich dieser entsprechend der Oberflächenstrukturierung der Matrize verformt. Der Umformdruck kann auch vollflächig durch ein elastisches Kissen ausgeübt werden.

Als nachteilig ist bei diesen Umformverfahren anzusehen, dass mit ihnen eine exakte Formgebung der Oberflächenstruktur des plattenförmigen Materials nur bei relativ geringen Materialstärken praktisch möglich ist. Bei zunehmender Materialstärke ergeben sich zunehmende Ungenauigkeiten, da sich das plattenförmige Material dann immer weniger exakt an die Matrize anpasst. So kommt es z.B. zu Ausrundungen, wo an sich scharfe Knicklinien gewünscht sind. Zudem sind die für das Umformen nötigen technischen Einrichtungen aufwendig und teuer, sodass sich deren Einsatz nur bei der Fertigung von großen Mengen rentiert.

Eine Umformung plattenförmigen Materials entlang einer Linie kann beispielsweise in einer Abkantvorrichtung erfolgen. Bei diesem Verfahren ist aber eine praktisch beliebige dreidimensionale Strukturierung des Materials nicht möglich.

Für die vorliegende Erfindung stellt sich daher die Aufgabe, ein Verfahren der eingangs genannten Art anzugeben, welches die vorstehend angegebenen Nachteile vermeidet und mit dem praktisch beliebige dreidimensional strukturierte Umformungen des plattenförmigen Materials mit einem relativ geringen technischen Aufwand möglich sind.

Die Lösung dieser Aufgabe gelingt erfindungsgemäß mit einem Verfahren der eingangs genannten Art, das dadurch gekennzeichnet ist, dass im plattenförmigen Material in dessen umzuformenden Bereichen vor der Umformung auf der der Matrize abgewandten Seite eine Verminderung der Materialstärke vorgenommen wird.

Mit der Erfindung wird ein an sich bekanntes Umformverfahren durch Druckbeaufschlagung beispielsweise eines Blechzuschnitts auf einer Matrize, dahingehend weitergebildet, dass vor dem Umformvorgang gezielt eine Verminderung der Materialstärke in den umzuformenden Bereichen des plattenförmigen Materials auf der der Matrize abgewandten Seite vorgenommen wird. Dadurch wird ein exaktes Umformen des plattenförmigen Materials in diesen Bereichen mit Verminderung der Materialstärke durch die Druckbeaufschlagung in der Matrize erleichtert oder sogar erst ermöglicht. Diese Verminderung der Materialstärke kann im Minimalfall punktförmig erfolgen, beispielsweise zum Erzeugen einer Struktur mit kleinen kalottenförmigen Vorsprüngen, wofür nur eine geringfügige Umformung des umgebenden plattenförmigen Materials nötig ist. Ein Vorteil der Erfindung besteht auch darin, dass auf der der Matrize zugewandten Seite, die bevorzugt die später sichtbare Oberfläche des zu dem dreidimensionalen Objekt umgeformten plattenförmigen Materials bildet, eine zwar optisch in Teilflächen aufgeteilte, aber ansonsten nach wie vor glatte, unbearbeitete Oberfläche sichtbar ist, die daher optisch unbeeinträchtigt sowie unanfällig gegen Korrosion ist. Damit eignet sich das Verfahren besonders für Materialien mit empfindlicher Oberfläche, wie z.B. spiegelpoliertes Metall. Durch die Materialverdünnung können insbesondere auch exakte, scharfkantige Knicke oder Kanten erhalten werden. Aufgrund der verringerten Materialstärke bedarf es zudem vorteilhaft weniger Kraftaufwand oder Druck zum Umformen. In der Praxis kann das plattenförmige Material eine Stärke von mehreren Millimetern haben, wobei im Bereich der Materialverdünnungen die Materialstärke auf vorzugsweise weniger als die Hälfte der ursprünglichen Stärke reduziert wird.

Eine bevorzugte Weiterbildung schlägt vor, dass die Verminderung der Materialstärke linienförmig erfolgt und dass die Umformung ein Abknicken des Materials entlang der linienförmigen Materialstärkeverminderung ist oder einschließt. Derart können benachbarte Abschnitte des plattenförmigen Materials relativ zueinander leicht und exakt geknickt werden. Die jeweils einer Linie benachbarten umgebenden Bereiche des plattenförmigen Materials werden an der Linie, die durch die Verminderung der Materialstärke gebildet ist, je nach der Knickrichtung beim Umknicken voneinander weg geknickt oder aufeinander zu geknickt. Dabei können diese linienförmigen Materialausnehmungen derart anordnet werden, dass eine gewünschte dreidimensionale Struktur nach dem Umformen erzeugt ist.

Bevorzugt wird die linienförmige Materialstärkeverminderung entlang mehrerer Linien vorgenommen, um auch komplexere dreidimensionale Objekte herstellen zu können.

In weiterer Ausgestaltung ist vorgesehen, dass die linienförmige Materialstärkeverminderung entlang mehrerer Linien mit unterschiedlichen, nichtparallelen Linienrichtungen vorgenommen wird. Hiermit werden weitere Gestaltungsmöglichkeiten geschaffen.

Weiterhin kann die linienförmige Materialstärkeverminderung entlang mehrerer Linien mit unterschiedlichen, aufeinandertreffenden und/oder einander kreuzenden Linienrichtungen vorgenommen werden. Beispielsweise können zwei oder mehr derartige Knicklinien jeweils im Winkel aufeinander treffen, um eine dachkantartige oder pyramidenförmige Struktur zu erhalten. Auch eine netzartige Anordnung der Linien ist denkbar.

Eine Ausgestaltung sieht vor, dass die/jede linienförmige Materialstärkeverminderung durchgehend geradlinig oder in Form von aneinander anschließenden geradlinigen Abschnitten unterschiedlicher Richtung vorgenommen wird.

Es besteht auch die Möglichkeit, dass die/jede linienförmige Materialstärkeverminderung entlang durchgehend gebogen oder abschnittsweise gebogen verlaufender Linien vorgenommen wird. Somit können auch gebogene oder sonstige nicht linear verlaufende Materialverdünnungen ausgebildet werden, um Objekte mit abgerundeten oder gebogenen dreidimensionalen Strukturen zu erhalten.

Eine Weiterbildung dazu schlägt vor, dass die Verminderung der Materialstärke linienförmig entlang einer in sich oder unter Einbezug eines Materialrandes geschlossenen Linie erfolgt und dass die Umformung ein flächiges Vor- oder Zurückdrücken des Materials innerhalb der geschlossenen Linie ist. Hiermit wird also jeweils eine Teilfläche des Materials aus der Ursprungsebene in eine dazu parallele, höher oder tiefer liegende Ebene gedrückt, was zusätzliche gestalterische Möglichkeiten eröffnet.

Zweckmäßig sind die Materialstärkeverminderungen nutförmig. Formgebung, Breite und Tiefe der Nuten können in Abhängigkeit von der gewünschten späteren Form vom Fachmann passend gewählt werden. Beispielsweise ergibt eine tiefe schmale Nut eine scharfe Knicklinie und eine flache breite Nut eine gerundete Knicklinie im fertigen Objekt.

Eine weitere Ausgestaltung sieht vor, dass die Umformung ein bereichsweises Runddrücken des Materials ist oder einschließt. Auf diese Weise können auch gewölbte Bereiche im dreidimensionalen Objekt erzeugt werden, wobei diese sowohl konvex als auch konkav sein können.

Bevorzugt wird das Runddrücken des Materials in einem äußeren Materialrandbereich vorgenommen, wodurch ein optisch ansprechender Rand des Objekts herstellbar ist.

Eine weitere Ausgestaltung des erfindungsgemäßen Verfahrens sieht vor, dass die Verminderung der Materialstärke flächenförmig als wenigstens eine Ausnehmung erfolgt und dass die Umformung ein Prägen des Materials innerhalb der flächenförmigen Ausnehmung ist oder einschließt. Dabei können im plattenförmigen Material bzw. dem daraus erzeugten Objekt eine oder mehrere flächenförmige Ausnehmungen allein oder auch in Kombination mit einer oder mehreren linienförmigen Materialstärkeverminderungen vorgesehen sein. In der flächenförmigen Ausnehmung ist ein Umformen des Materials durch Prägen vereinfacht, weil das Material hier dünner ist und so weniger Kraft für ein Umformen durch Prägen nötig ist. Vorzugsweise werden mit dem Prägen konvexe oder konkave oder daraus gemischte Formen erzeugt. Mit dieser Verfahrensvariante werden vorteilhaft weitere vielfältige optische Gestaltungsmöglichkeiten für das dreidimensionale Objekt zur Verfügung gestellt.

Bevorzugt wird als plattenförmiges Material ein metallischer Werkstoff oder ein Kunststoff eingesetzt. Der metallische Werkstoff ist z.B. Aluminium, Messing, Bronze, Neusilber, Kupfer oder Edelstahl in beliebiger Legierung. Der Kunststoff kann z.B. ein Thermoplast sein, der zu seiner Umformung erwärmt wird und der nach der Umformung abgekühlt wird und dann seine Form behält. Alternativ kann als plattenförmiges Material auch ein sonstiges verformbares Material eingesetzt werden.

Zum einfachen Erzeugen der Materialstärkeverminderung wird vorgeschlagen, dass die Materialstärke durch einen Fräsvorgang vermindert wird. Dies kann beispielsweise auf einer computergesteuerten CNC-Fräsmaschine erfolgen. Dabei werden vom Konstrukteur oder Designer die gewünschten Fräslinien in Form von digitalen Daten vorgegeben und dann von der Maschine selbsttätig ausgefräst. Die Materialstärkeverminderungen können auch mit anderem Material abtragenden Bearbeitungsverfahren, wie Hobeln, Funkenerodieren oder chemisches Ätzen, erzeugt werden.

Dabei können die Formgebung oder das Profil einer Materialstärkeverminderung vom Fachmann in an sich beliebiger Weise gewählt werden. Möglich sind z.B. im Querschnitt V-förmige, U-förmige, rechteckige, halbkreisförmige oder halbelliptische Profile oder asymmetrische Profile, deren Breite über die Tiefe gesehen variiert. Auch können in einer beispielsweise im Querschnitt rechteckigen Materialausnehmung in deren Grund eine oder mehrere weitere Materialstärkeverminderungen ausgebildet sein, um z.B. auch bei Materialien mit besonders großer Materialstärke konturenscharfe dreidimensional strukturierte Oberflächen oder Objekte zu erhalten oder um mit einer Fase versehene Knicke zu erzeugen.

In einer weiteren Ausgestaltung des erfindungsgemäßen Verfahrens ist vorgesehen, dass der Druck zur Umformung von einer Patrize auf das plattenförmige Material ausgeübt wird. Dazu ist die Patrize zweckmäßig an ihrer Oberfläche entsprechend der eine Negativform darstellenden Matrize positiv strukturiert, um den Druck zur Umformung des auf die Matrize aufgelegten plattenförmigen Materials über dessen Fläche zur Matrize passend aufzubringen.

Dabei kann der Druck auf die der Matrize abgewandte Seite des plattenförmigen Materials in einer mechanischen oder hydraulischen Presse ausgeübt werden. Wenn eine Patrize eingesetzt wird, kann diese durch die hydraulische oder mechanische Presse unter Zwischenlage des umzuformenden plattenförmigen Materials auf die Matrize gepresst werden. Alternativ kann auch ein Pressenstempel selbst als Patrize ausgebildet sein. Weiter alternativ kann der Druck auf die der Matrize abgewandte Seite des umzuformenden plattenförmigen Materials durch zwei drehbare Walzen ausgeübt werden. Wenn hierbei eine rückseitig jeweils flache Matrize und Patrize eingesetzt wird, können Matrize und Patrize unter Zwischenlage des umzuformenden plattenförmigen Materials zwischen den zwei rotierenden Walzen unter Druckausübung hindurchgeführt werden. Alternativ können die Walzen selbst als Matrize und Patrize mit entsprechend strukturierten Oberflächen ausgebildet sein und das umzuformende plattenförmige Material kann dann unmittelbar zwischen den zwei rotierenden Walzen unter Druckausübung durch die Walzen hindurchgeführt und im Durchlauf umgeformt werden. Diese Alternative ist insbesondere dann wirtschaftlich sinnvoll, wenn größere Mengen an plattenförmigem Material in identischer Weise umgeformt werden sollen. Gemäß einer weiteren Alternative kann der Druck auf die der Matrize abgewandte Seite des plattenförmigen Materials durch ein Fluid, wie eine Flüssigkeit oder ein Gas, ausgeübt werden. Dazu wird mittels einer um das plattenförmige Material durchgehend umlaufenden Dichtung an der von der Matrize abgewandten Seite des umzuformenden plattenförmigen Materials ein Druckraum zur Erzeugung und Aufrechterhaltung des für die Umformung notwendigen Fluiddrucks gebildet. Weiter alternativ kann der für die Umformung des plattenförmigen Materials notwendige Druck auch durch ein elastisches Kissen oder einen elastischen Stempel, wie ein Gummikissen, ausgeübt werden.

In dem Umformverfahren kann z.B. das plattenförmige Material zu dreidimensionalen Objekten in Form von Buchstaben oder Ziffern oder Logos umgeformt werden. Somit lässt sich das Verfahren zur Herstellung von hochwertigen Beschriftungen und Kennzeichnungen, z.B. für Firmengebäude oder Yachten, nutzen. Auch rein dekorative Objekte können geschaffen werden.

Da die Stabilität des zunächst plattenförmigen Materials durch das Anbringen der Materialstärkeverminderungen reduziert wird, wird vorgeschlagen, dass zum Ausgleich an der die Materialstärkenverminderung aufweisenden Seite des plattenförmigen Materials nach dessen Umformung zu dem dreidimensionalen Objekt eine versteifende Rückfläche angebracht wird. Dabei kann als Rückfläche eine glatte Platte aus Metall oder Kunststoff angebracht, vorzugsweise angeklebt, werden. Alternativ kann als Rückfläche eine Füllung angebracht, vorzugsweise eingegossen, werden, die z.B. aus einem zunächst flüssigen, aushärtenden oder aushärtbaren Material, wie Zweikomponentengießharz, besteht.

Um dem durch das Umformen erzeugten dreidimensionalen Objekt eine Zusatzfunktion zu verleihen, kann nach dem Umformen des plattenförmigen Materials in das dreidimensionale Objekt in dessen Innerem mindestens eine Licht nach außen abstrahlende Lichtquelle angebracht werden. Das dreidimensionale Objekt kann so als Beleuchtungselement verwendet werden und/oder es erleichtert bei einer Ausführung als Buchstabe, Ziffer oder Logo seine eigene Lesbarkeit in dunkler Umgebung.

In der Praxis lassen sich Objekte mit Flächendimensionen von bis zu mehreren Metern mit exakten und scharfen Knicklinien herstellen, die an ihrer Oberfläche beispielsweise eine kristallartige Struktur aufweisen. Zur mechanischen Stabilisierung können auf der nicht sichtbaren Rückseite des Objekts an dessen rückseitige Form und Struktur angepasste Versteifungselemente angebracht werden.

Mit dem erfindungsgemäßen Verfahren können aus zunächst plattenförmigem Material unterschiedlichst gestaltete dreidimensionale Objekte hergestellt werden, die eine informative Funktion oder eine dekorative Funktion oder gleichzeitig beide Funktionen haben können. Die äußere Form der Objekte ist praktisch beliebig und kann einfach rechteckig oder rund sein oder auch andere Umrissformen aufweisen. Die Objekte können vollflächig sein; sie können aber auch Materialausschnitte aufweisen, die vor oder im oder nach dem erfindungsgemäßen Umformvorgang erzeugt werden. Es können auch mehrere Objekte zu großen Objekten zusammengebaut werden, zweckmäßig mittels rückseitiger, für einen Betrachter nicht sichtbarer Verbindungsmittel.

Im Folgenden werden Ausführungsbeispiele der Erfindung anhand einer Zeichnung erläutert. Die Figuren der Zeichnung zeigen:
- Figur 1: ein plattenförmiges Material mit nutförmigen Materialstärkeverminderungen und mit einem Fräskopf, im Querschnitt,
- Figur 2: verschiedene Querschnittsformen der Materialstärkeverminderungen im plattenförmigen Material, jeweils im Querschnitt,
- Figur 3: das plattenförmige Material mit zwei benachbarten identischen Materialstärkeverminderungen, im Querschnitt,
- Figur 4: das plattenförmige Material mit zwei benachbarten unterschiedlichen Materialstärkeverminderungen, im Querschnitt,
- Figur 5: das plattenförmige Material mit einer Materialausnehmung und mit zwei Materialstärkeverminderungen im Grund der Ausnehmung, im Querschnitt,
- Figur 6: schematisch einen Umformvorgang mit Matrize und Patrize in einer Presse,
- Figur 7: schematisch einen Umformvorgang mit Matrize und Patrize zwischen zwei Walzen,
- Figur 8: schematisch einen Umformvorgang zwischen Matrize und exakt formangepasster, harter Patrize,
- Figur 9: schematisch einen Umformvorgang zwischen Matrize und grob formangepasster, elastischer Patrize,
- Figur 10: ein erstes plattenförmiges Material vor dem Umformen (rechts) und nach dem Umformen (links),
- Figur 11: ein zweites plattenförmiges Material vor dem Umformen (links) und nach dem Umformen (rechts),
- Figur 12: schematisch einen Umformvorgang zwischen Matrize und Patrize mit einem Runddrücken eines Materialrandbereichs,
- Figur 13: ein plattenförmiges Material vor einer Umformung,
- Figur 14: schematisch ein durch Umformung aus dem plattenförmigen Material nach Figur 13 erzeugtes Objekt zusammen mit Matrize und Patrize,
- Figur 15 bis Figur 20: verschiedene Beispiele von dreidimensionalen Objekten, jeweils in Draufsicht, und
- Figur 21: ein weiteres plattenförmiges Material vor einer Umformung und das durch Umformung daraus erzeugte Objekt zusammen mit Matrize und Patrize.

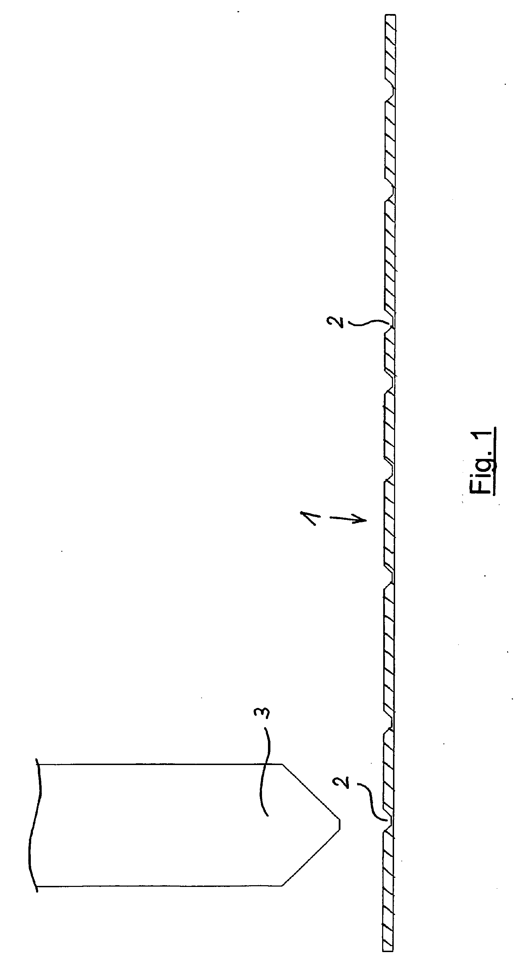

Die Figur 1 der Zeichnung zeigt ein plattenförmiges Material 1, beispielsweise aus einem metallischen Werkstoff, wie Stahlblech, im Querschnitt. Mittels eines Fräskopfs 3 sind in die hier nach oben weisende Seite des plattenförmigen Materials 1 mehrere Nuten eingefräst, um lokal eine Materialstärkeverminderung 2 am Ort der Nut zu erhalten. Die Materialstärkeverminderungen 2 verlaufen z.B. linear und können eine gewünschte Struktur, wie Netzstruktur, in einer regelmäßigen oder auch unregelmäßigen Anordnung bilden. Die Materialstärkeverminderungen 2 können aber auch gekrümmt in einer Kurvenbahn verlaufen. Prinzipiell kann die Verminderung 2 der Materialstärke auch durch andere Bearbeitungsverfahren, wie Hobeln, Funkenerodieren oder Ätzen, erhalten werden. In einfacher Weise erfolgt das Fräsen auf einer computergesteuerten CNC-Fräsmaschine, der die gewünschten Verläufe und Profiltiefen als elektronischer Datensatz vorgegeben werden. Das Anbringen der nutförmigen Materialstärkeverminderungen 2 dient der Vorbereitung des Materials 1 für einen nachfolgenden Umformvorgang, der weiter unten noch beschrieben wird.

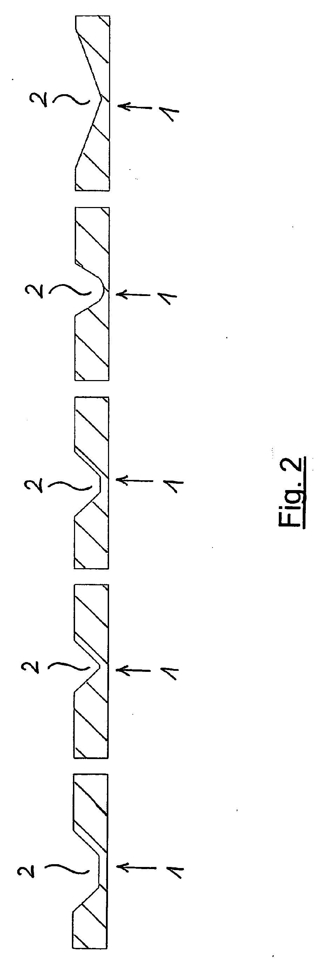

In Figur 2 sind im Querschnitt verschiedene Profilformen für die nutartigen Materialstärkeverminderungen 2 im plattenförmigen Material 1 beispielhaft dargestellt. Von links nach rechts sind dies ein breit trapezförmiges, ein dreieckiges, ein schmal trapezförmiges, ein am Grund der Materialstärkeverminderung 2 abgerundetes und ein flach V-förmiges Profil. Andere Profilformen sind selbstverständlich möglich.

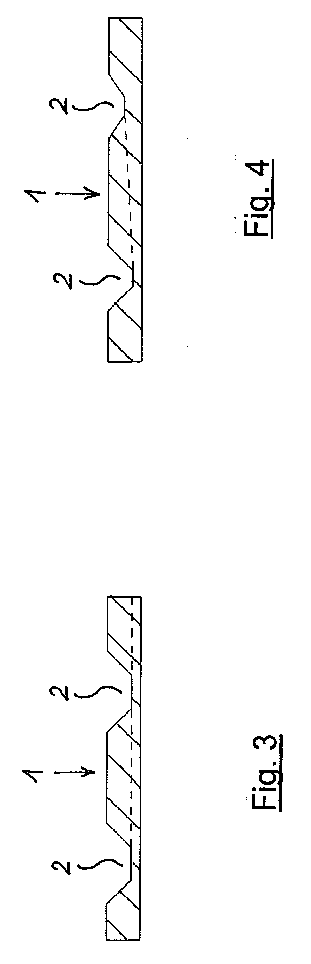

Im Querschnitt nebeneinander sind in Figur 3 zwei nutartige Materialstärkeverminderungen 2 mit gleichem trapezförmigem Profil und in Figur 4 zwei nutartige Materialstärkeverminderungen 2 mit verschiedenen trapezförmigen Profilen unterschiedlicher Tiefen jeweils in einem plattenförmigen Material 1 dargestellt.

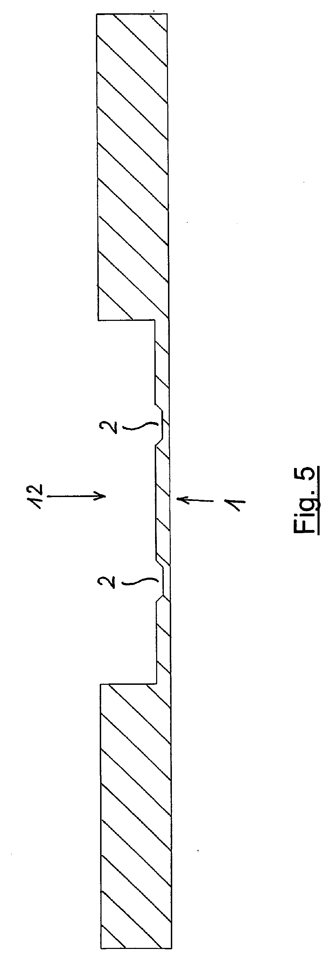

In Figur 5 ist wieder im Querschnitt ein plattenförmiges Material 1 mit einer rechteckigen Materialausnehmung 12 gezeigt, wobei zwei nutartige Materialstärkeverminderungen 2 im Grund der Materialausnehmung 12 angebracht sind. Auf diese Weise kann auch relativ dickes Material exakt umgeformt, d.h. entlang der linienförmigen Materialstärkeverminderungen 2 abgeknickt, werden.

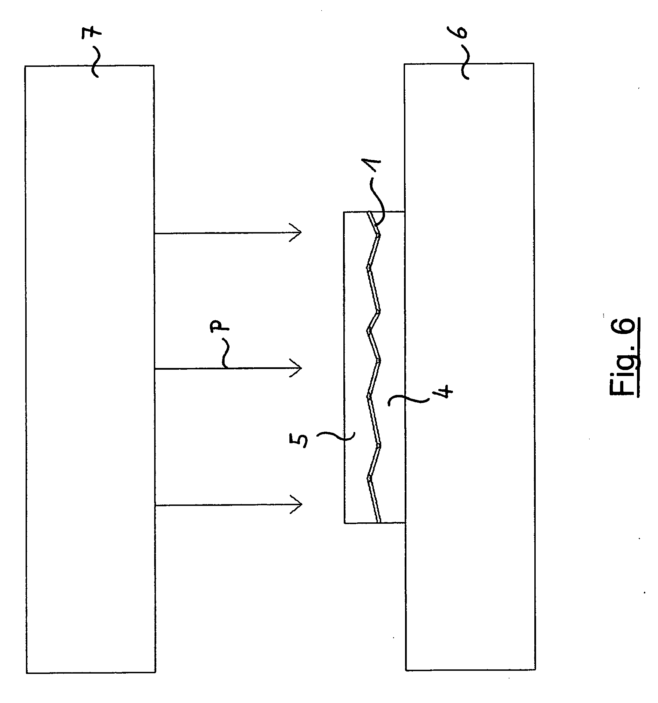

In Figur 6 ist ein erstes Beispiel des eigentlichen Umformvorgangs schematisch dargestellt. Dabei ist ein mit Materialstärkeverminderungen 2 in Form von Nuten versehenes plattenförmiges Material 1 zwischen eine negative Matrize 4 und eine positive Patrize 5 eingelegt. Matrize 4 und Patrize 5 bestehen jeweils aus Metall, wie Stahl oder Aluminium, oder auch aus Holz oder Kunststoff oder einem anderen ausreichend stabilen Material. Dabei sind die Materialstärkeverminderungen 2 in der Rückseite des plattenförmigen Material 1 angebracht und der Patrize 5 zugewandt.

Die Matrize 4 und die Patrize 5 werden im Umformvorgang durch zwei Stempel 6 und 7 einer hydraulischen oder mechanischen Presse zusammengepresst, wie durch die Pfeile P verdeutlicht ist. Dadurch wird das plattenförmige Material 1 entlang der Materialstärkeverminderungen 2 abgeknickt und erhält so seine gewünschte dreidimensionale Struktur. Als Ergebnis entsteht ein dreidimensionales Objekt. Durch die Materialstärkeverminderungen 2 wird jeweils ein scharfer Knick mit glatter Oberfläche auf der der Matrize 4 zugewandten Seite des plattenförmigen Materials 1 erhalten, wobei diese Seite später in der Regel die Sichtseite des Objekts ist.

Prinzipiell kann das plattenförmige Material 1 auch anders herum eingelegt werden, wenn die Materialstärkeverminderungen 2 als gestalterisches Element des Objekts sichtbar sein sollen.

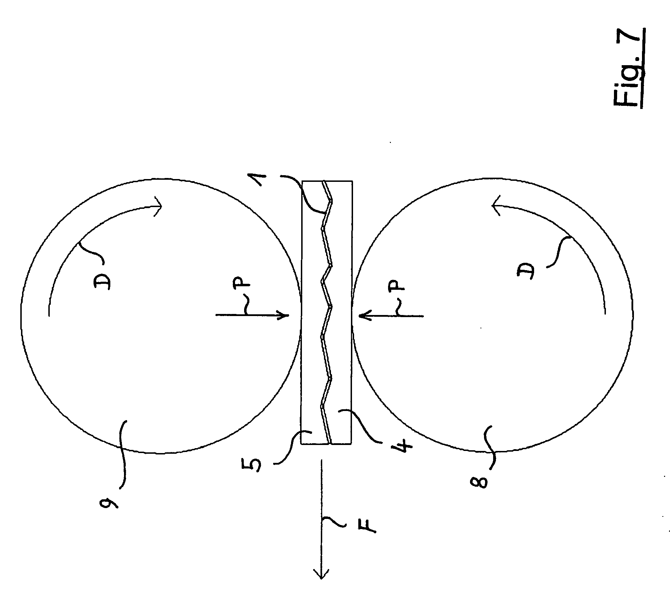

In Figur 7 ist eine andere Möglichkeit zur Umformung schematisch dargestellt. Dabei sind die Matrize 4 und die Patrize 5 jeweils mit einer flachen Rückseite ausgeführt und werden mit dem dazwischen angeordneten plattenförmigen Material 1 zwischen zwei sich gegensinnig jeweils in der eingezeichneten Drehrichtung D drehenden Walzen 8 und 9 in Förderrichtung F hindurchgeführt. Dabei wird von den Walzen 8, 9 ein ausreichender Druck ausgeübt, um die Matrize 4 mit der Patrize 5 zusammenzupressen und so das zunächst flache plattenförmige Material 1 mit den zuvor angebrachten Materialstärkeverminderungen 2 zu dem dreidimensionalen Objekt umzuformen.

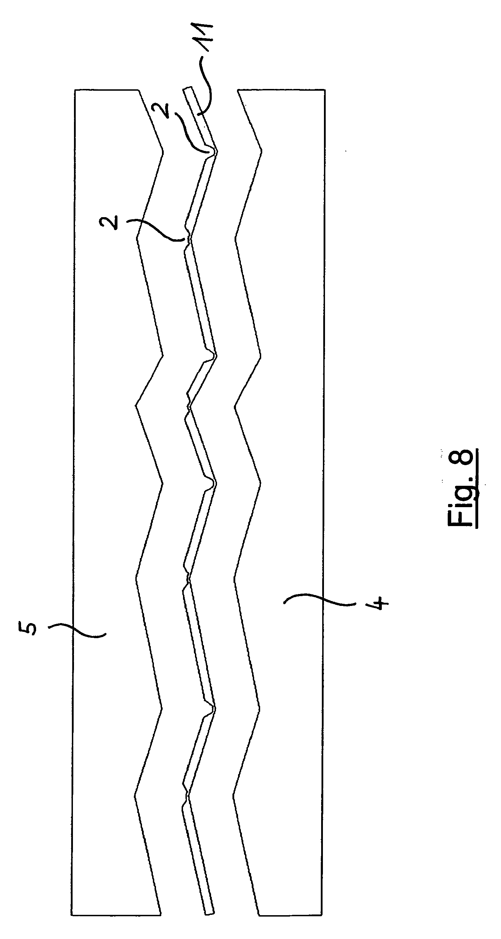

Gemäß der Ausführung nach Figur 8 kann die Patrize 5 eine der Matrize 4 zugewandte harte Oberfläche aufweisen, die ein exaktes Negativ der Oberfläche der Matrize 4 darstellt. So wird das plattenförmige Material zwangsweise besonders exakt zu dem dreidimensionalen Objekt 11 umgeformt, das hier zwischen Matrize und Patrize dargestellt ist. Die hier untere Seite des Objekts 11 ist in der Regel dessen Sichtseite. In der hier nach oben weisenden Rückseite des Objekts 11 sind die nutförmigen Materialstärkeverminderungen 2 angebracht.

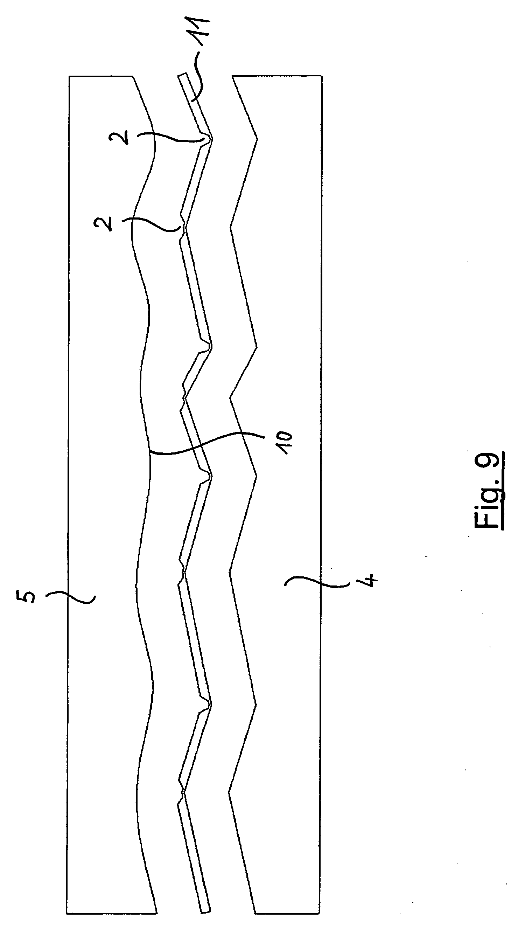

In einer anderen Ausgestaltung nach Figur 9 ist das plattenförmige Material auf die Matrize 4 aufgelegt und der erforderliche Druck zur Umformung wird vollflächig durch die aus einem elastischen Kissen 10, wie ein Gummikissen, bestehende oder ein solches Kissen tragende Patrize 5 ausgeübt. Prinzipiell kann der Druck auch durch ein Fluid, wie eine Flüssigkeit oder ein Gas, ausgeübt werden.

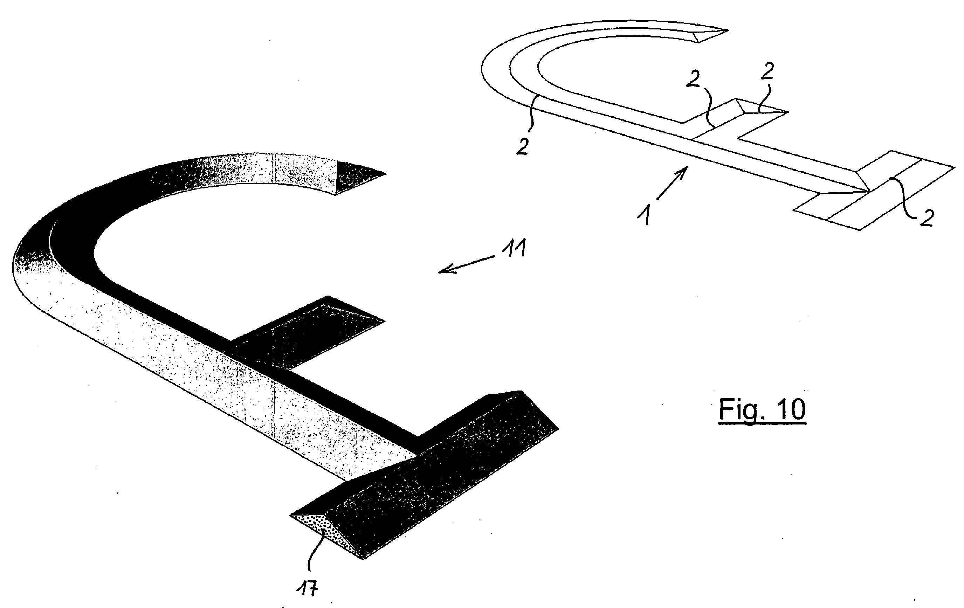

In Figur 10 ist ein plattenförmiges Material 1, wie Blechzuschnitt, vor und nach dem Umformen abgebildet. Rechts in Figur 10 ist das noch unverformte plattenförmige Material 1 mit dem Verlauf der linienförmigen Materialstärkeverminderungen 2 wiedergegeben, wobei in der Realität die Materialstärkeverminderungen 2 in der Regel an der Unterseite des Materials 1 liegen, in Figur 10 aber zum Zweck der Sichtbarkeit an der Oberseite gezeichnet sind. Diese Materialstärkeverminderungen 2 führen beim gezeigten Beispiel dazu, dass nach dem Umformen ein dreidimensionales Objekt 11 in Form des Buchstaben "f' erhalten wird, das in Figur 10 links dargestellt ist. Selbstverständlich lassen sich so beliebige Buchstaben, Ziffern und sonstige Zeichen herstellen, die für informative Zwecke genutzt werden können.

Wie am Objekt 11 links unten angedeutet ist, kann zur Verstärkung und Versteifung des Objekts 11 an dessen Rückseite eine versteifende Rückfläche 17 angebracht werden, beispielsweise als flüssige Masse eingegossen und dann ausgehärtet werden. Da diese Rückfläche 17 von der Sichtseite des Objekts 11 nicht zu sehen ist, stört die Rückfläche das Erscheinungsbild nicht. Die in Figur 10 sichtbare kleine Stirnseite der Rückfläche 17 verschwindet optisch auch noch, wenn mehrere buchstabenförmige Objekte 11 zu einem Schriftzug dicht aneinandergereiht werden.

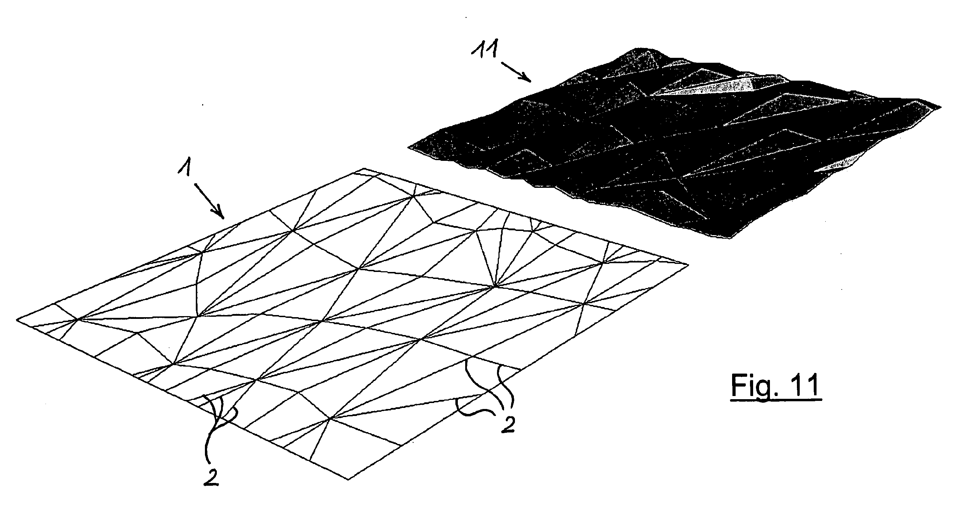

Figur 11 zeigt ebenfalls ein plattenförmiges Material 1, wie Blechzuschnitt, vor und nach dem Umformen. Links in Figur 11 ist das plattenförmige Material 1 vor seinem Umformen dargestellt. Dieses Material 1 ist hier mit einer netzartigen Anordnung von Materialstärkeverminderungen 2 versehen. Nach dem Umformen ergibt sich so das rechts in Figur 11 dargestellte dreidimensionale Objekt 11 mit einer facettenartigen Oberfläche. Das hier dargestellte dreidimensionale Objekt 11 ist ein dekoratives Objekt, z.B. eine Wandverkleidung. Bei einer spiegelnden Oberfläche des Objekts 11 lassen sich, insbesondere in Verbindung mit natürlicher oder künstlicher Beleuchtung, sehr interessante optische Effekte erzielen.

Wie die Figuren 10 und 11 veranschaulichen, können zwei oder mehr linienförmige Materialstärkeverminderungen 2 unter einem Winkel aneinander stoßen, um gewünschte Knicke, Kanten oder Ecken im dreidimensionalen Objekt 11 zu erhalten.

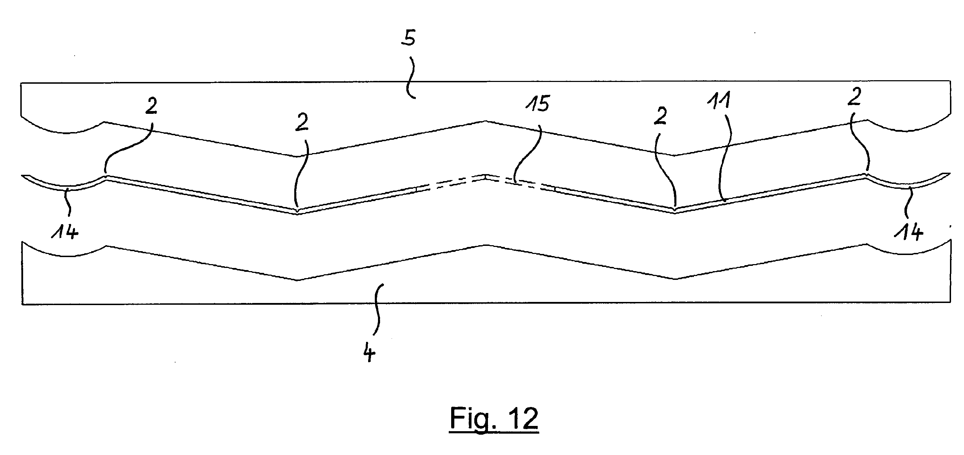

In Figur 12 ist schematisch ein weiteres Beispiel für einen Umformvorgang gezeigt. Auch hier wird ein zunächst plattenförmiges Material zwischen einer Matrize 4 und einer Patrize 5 durch deren Zusammenpressen zu einem dreidimensionalen Objekt 11 umgeformt. Auch hier werden im Umformvorgang entlang von zuvor angebrachten linienförmigen Materialstärkeverminderungen 2 Knicke erzeugt. Gleichzeitig erfolgt hier im äußeren Materialrandbereich ein Runddrücken des Materials, um eine gewölbte Umrandung des dreidimensionalen Objekts 11 zu erzeugen. Selbstverständlich können auch andere Bereiche des Objekts 11 in eine rundgedrückte Form gebracht werden.

Außerdem zeigt Figur 12, dass im plattenförmigen Material ein oder mehrere Materialausschnitte 15 vorab oder im Umformvorgang angebracht werden können, um durchbrochene Objekte 11 zu erzeugen.

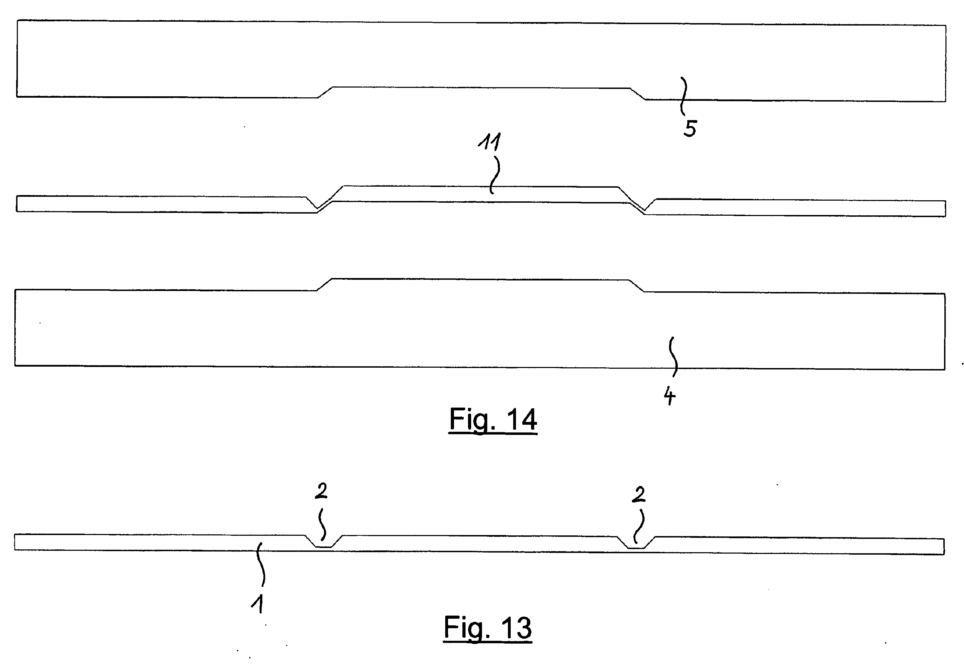

Alternativ oder zusätzlich zu dem Knicken und Runddrücken kann auch ein flächenparalleles Ein- oder Ausdrücken von Materialbereichen erfolgen, wie in Figur 13 und 14 veranschaulicht. Gemäß Figur 13 wird ein plattenförmiges Material 1 zunächst mit wenigstens einer Materialstärkeverminderung 2, z.B. in Form einer in sich geschlossenen Linie, versehen. Im anschließenden Umformvorgang wird dann gemäß Figur 14 der Materialbereich, der innerhalb der Materialstärkeverminderung 2 liegt, zwischen Matrize 4 und Patrize 5 relativ zum umgebenden Material nach oben herausgedrückt. Danach liegt im fertigen Objekt 11 der herausgedrückte Materialbereich flächenparallel, aber senkrecht zur Flächenebene versetzt, zum übrigen Flächenbereich des Objekts 11. Die Drückrichtung kann natürlich auch umgekehrt sein.

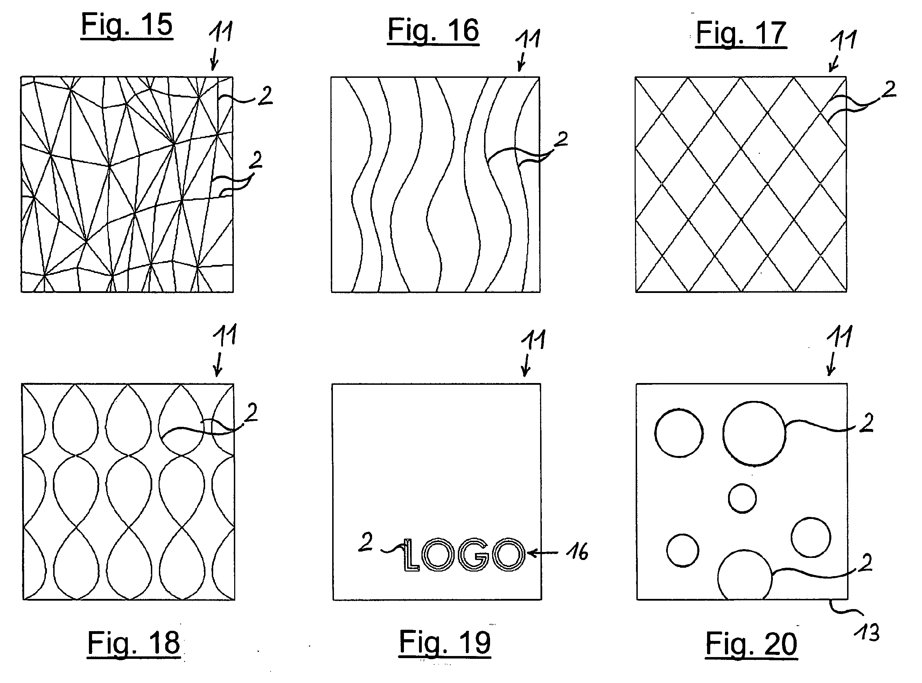

Mit dem Umformverfahren können vielfältige dreidimensionale Objekte 11 erzeugt werden, wie informative Objekte 11 in Form von Buchstaben, Ziffern Logos oder anderen Zeichen, oder wie dekorative Objekte 11 mit z.B. facettenartigen oder pyramidenförmigen oder kristallartigen Strukturen. Es können auch mehrere derartige Objekte 11 miteinander verbunden werden, um größere Gegenstände, wie Wandverkleidungen, zu erhalten. Verschiedene Beispiele von durch eine Umformung aus plattenförmigen Materialien erzeugten dreidimensionalen Objekten 11 sind in den Figuren 15 bis 20 jeweils in Draufsicht gezeigt.

Figur 15 zeigt ein Objekt 11 mit in einem unregelmäßigen Netz angebrachten linienförmigen Materialstärkeverminderungen 2, entlang welchen Knicklinien des Objekts verlaufen. Hierdurch wird ein Objekt 11 mit einer facettenartigen Oberseite erhalten.

Figur 16 zeigt ein Objekt 11, bei dem die linienförmigen Materialstärkeverminderungen 2 nebeneinander verlaufen, ohne sich zu berühren oder zu kreuzen. Entlang der Materialstärkeverminderungen 2 kann das Material im Umformvorgang geknickt und/oder flächenparallel ein- oder ausgedrückt sein.

Figur 17 zeigt ein Beispiel eines Objekts 11, bei dem die Materialstärkeverminderungen 2 in zwei einander kreuzenden Richtungen geradlinig verlaufen und ein Rautenmuster bilden. Entlang der Materialstärkeverminderungen 2 kann im Umformvorgang das Material geknickt oder flächenparallel ein- oder ausgedrückt sein.

In Figur 18 ist ein Beispiel eines Objekts 11 gezeigt, bei dem die Materialstärkeverminderungen 2 als geschwungene, gebogene Linien verlaufen. Auch hier kann das Material entlang dieser Linien im Umformvorgang geknickt oder flächenparallel ein - oder ausgedrückt sein.

Die Figur 19 zeigt ein Beispiel eines Objekts 11, welches einen dreidimensionalen Schriftzug 16 aufweist. Zu dessen Bildung sind zunächst die Materialstärkeverminderungen 2 in entsprechendem Verlauf in das Material eingebracht worden, wonach dann das Material entsprechend so umgeformt wurde, dass der Schriftzug 16 an der Sichtseite des Objekts 11 erhaben hervortritt.

In Figur 20 ist ein Objekt 11 gezeigt, welches mehrere runde Formelemente aufweist, die oberhalb oder unterhalb der Flächenebene des übrigen Objekts 11 liegen. Zunächst sind auch hier im plattenförmigen Ausgangsmaterial Materialstärkeverminderungen 2 angebracht worden, die hier die Form von Kreislinien haben. Dabei können die Kreise vollständig im Objekt 11 liegen oder dessen Materialrand 13 schneiden. Der Materialbereich jeweils im Inneren der Kreise kann flächenparallel ein- oder ausgedrückt oder alternativ oder zusätzlich durch Runddrücken nach oben oder unten gewölbt sein.

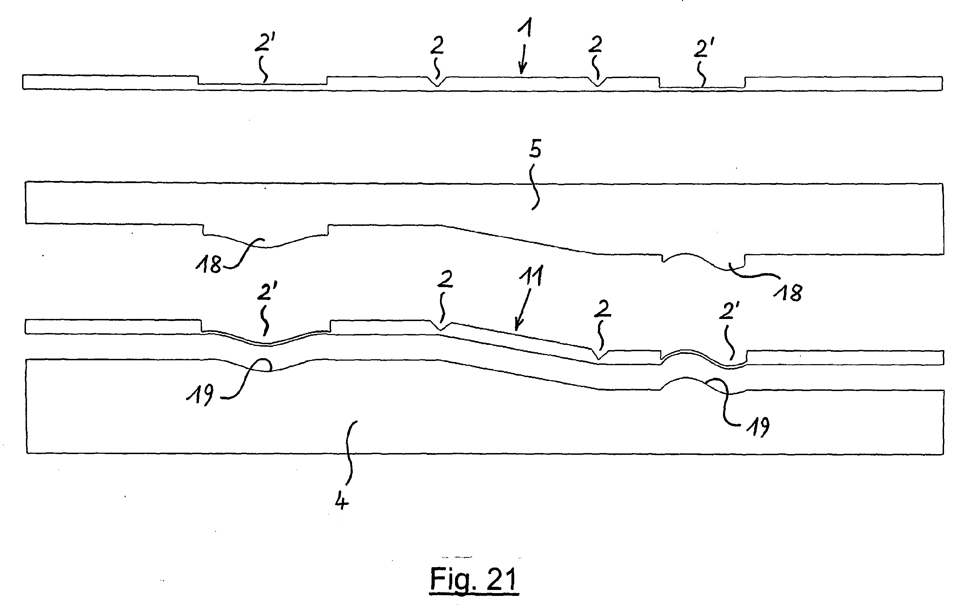

Figur 21 zeigt, ebenfalls in schematischer Darstellung, oben ein weiteres plattenförmiges Material 1 vor einer Umformung und darunter das durch Umformung daraus erzeugte Objekt 11 zusammen mit Matrize 4 und Patrize 5. Das plattenförmige Material 1 ist hier, wie oben schon beschrieben, mit linienförmigen, nutartigen Materialstärkeverminderungen 2 versehen, entlang welchen später bei der Umformung ein Abknicken des Materials erfolgt.

Zusätzlich zu den linienförmigen, nutartigen Materialstärkeverminderungen 2 ist bei dem Beispiel nach Figur 21 das plattenförmige Material 1 auf derselben Seite mit flächenförmigen Ausnehmungen 2' versehen, in denen die Materialstärke des plattenförmigen Materials 1 vermindert ist. Im Beispiel ist in der linken Ausnehmung 2' die Materialstärke etwa auf die Hälfte und in der rechten Ausnehmung 2' etwa auf ein Drittel der ursprünglichen Materialstärke vermindert. Auch die Ausnehmungen 2' werden zweckmäßig durch Fräsen auf einer CNC-Fräsmaschine erzeugt.

Die nachfolgende Umformung des so vorbereiteten plattenförmigen Materials 1 zu einem dreidimensionalen Objekt 11 erfolgt hier wieder zwischen einer Matrize 4 und einer Patrize 5. Dabei umfasst die Umformung neben einem Abknicken oder Abbiegen des Materials 1 entlang der linienförmigen Materialstärkeverminderungen 2 nun zusätzlich ein Prägen des Materials 1 innerhalb der flächenförmigen Ausnehmungen 2'. Dazu ist die Patrize 5 mit entsprechend angeordneten und geformten prägestempelartigen Bereichen 18 und die Matrize 4 mit entsprechend gegengleich geformten Flächenbereichen 19 ausgebildet. Das Objekt 11 ist hier in seinem Zustand nach dem Umformvorgang dargestellt.

Bei dem Umformvorgang kann auch ein Knicken des Materials 1 um einen Außenrand der Ausnehmung 2' erfolgen, wie in Figur 21 an der rechten Ausnehmung 2' gezeigt ist.

Durch das Prägen können konvexe oder konkave oder auch gemischten Formen am Objekt 11 erzeugt werden. Wegen der Materialschwächung in den Ausnehmungen 2' kann das Prägen dort mit relativ geringem Kraftaufwand erfolgen. Die ungeschwächten Bereiche des Materials 1 bzw. Objekts 11 sorgen für eine ausreichende verbleibende Gesamtstabilität. Die Materialstärkeverminderungen 2 und die Ausnehmungen 2' sind auch hier an der nach unten weisenden Sichtseite des Objekts 11 optisch nicht erkennbar.

Es können, insbesondere für große dreidimensionale Objekte 11, mehrere oder eine Vielzahl von kleineren Objekten oder Teilobjekten zu dem gewünschten großen Objekt 11 zusammengebaut werden. Das Zusammenbauen kann dabei an der später nicht mehr sichtbaren Rückseite des Objekts 11 erfolgen, z.B. durch Klebeverbindungen oder mechanische Verbindungselemente, wie Klammern oder ähnliche Mittel.

### Bezugszeichenliste:

| Zeichen | Bezeichnung |
|---|---|
| 1 | plattenförmiges Material |
| 2 | linienförmigen Materialstärkeverminderung (Nut) |
| 2' | flächenförmige Ausnehmung |
| 3 | Fräskopf |
| 4 | Matrize |
| 5 | Patrize |
| 6 | Stempel |
| 7 | Stempel |
| 8 | Walze |
| 9 | Walze |
| 10 | elastische Oberfläche von 5 |
| 11 | dreidimensionales Objekt |
| 12 | Materialausnehmung |
| 13 | Materialrand |
| 14 | äußerer Randbereich |
| 15 | Materialausschnitt |
| 16 | Schriftzug |
| 17 | Rückfläche |
| 18 | prägestempelartige Bereiche von 5 |
| 19 | Flächenbereiche von 4 |
| | |
| P | Pressrichtung |
| D | Drehrichtung von 8, 9 |
| F | Förderrichtung |

## Patentansprüche

1. Verfahren zum Umformen eines plattenförmigen Materials (1) in ein dreidimensionales Objekt (11), wobei das Material (1) auf einer Matrize (4) durch Ausüben von Druck auf eine der Matrize (4) abgewandte Seite des plattenförmigen Materials (1) umgeformt wird,
**dadurch gekennzeichnet,**
**dass** im plattenförmigen Material (1) in dessen umzuformenden Bereichen vor der Umformung auf der der Matrize (4) abgewandten Seite eine Verminderung (2) der Materialstärke vorgenommen wird.

2. Verfahren nach Anspruch 1, **dadurch gekennzeichnet, dass** die Verminderung der Materialstärke linienförmig erfolgt und dass die Umformung ein Abknicken des Materials (1) entlang der linienförmigen Materialstärkeverminderung (2) ist oder einschließt.

3. Verfahren nach Anspruch 2, **dadurch gekennzeichnet, dass** die linienförmige Materialstärkeverminderung (2) entlang mehrerer Linien vorgenommen wird.

4. Verfahren nach Anspruch 2 oder 3, **dadurch gekennzeichnet, dass** die linienförmige Materialstärkeverminderung (2) entlang mehrerer Linien mit unterschiedlichen, nichtparallelen Linienrichtungen vorgenommen wird.

5. Verfahren nach einem der Ansprüche 2 bis 4, **dadurch gekennzeichnet, dass** die linienförmige Materialstärkeverminderung (2) entlang mehrerer Linien mit unterschiedlichen, aufeinandertreffenden und/oder einander kreuzenden Linienrichtungen vorgenommen wird.

6. Verfahren nach einem der Ansprüche 2 bis 5, **dadurch gekennzeichnet, dass** die/jede linienförmige Materialstärkeverminderung (2) durchgehend geradlinig oder in Form von aneinander anschließenden geradlinigen Abschnitten unterschiedlicher Richtung vorgenommen wird.

7. Verfahren nach einem der Ansprüche 2 bis 6, **dadurch gekennzeichnet, dass** die/jede linienförmige Materialstärkeverminderung (2) entlang durchgehend gebogen oder abschnittsweise gebogen verlaufender Linien vorgenommen wird.

8. Verfahren nach einem der Ansprüche 1 bis 7, **dadurch gekennzeichnet, dass** die Verminderung (2) der Materialstärke linienförmig entlang einer in sich oder unter Einbezug eines Materialrandes (13) geschlossenen Linie erfolgt und dass die Umformung ein flächiges Vor- oder Zurückdrücken des Materials (1) innerhalb der geschlossenen Linie ist.

9. Verfahren nach einem der Ansprüche 1 bis 8, **dadurch gekennzeichnet, dass** die Umformung ein bereichsweises Runddrücken des Materials (1) ist oder einschließt.

10. Verfahren nach Anspruche 9, **dadurch gekennzeichnet, dass** das Runddrücken des Materials (1) in einem äußeren Materialrandbereich (14) vorgenommen wird.

11. Verfahren nach einem der Ansprüche 1 bis 10, **dadurch gekennzeichnet, dass** die Verminderung der Materialstärke flächenförmig als wenigstens eine Ausnehmung (2') erfolgt und dass die Umformung ein Prägen des Materials (1) innerhalb der flächenförmigen Ausnehmung (2') ist oder einschließt.

12. Verfahren nach einem der Ansprüche 1 bis 11, **dadurch gekennzeichnet, dass** als plattenförmiges Material (1) ein metallischer Werkstoff oder ein Kunststoff eingesetzt wird.

13. Verfahren nach einem der Ansprüche 1 bis 12, **dadurch gekennzeichnet, dass** der Druck zur Umformung von einer Patrize (5) auf das plattenförmige Material (1) ausgeübt wird.

14. Verfahren nach einem der Ansprüche 1 bis 13, **dadurch gekennzeichnet, dass** der Druck auf die der Matrize (4) abgewandte Seite des plattenförmigen Materials (1) in einer mechanischen oder hydraulischen Presse oder durch zwei drehbare Walzen (8, 9) oder durch ein Fluid ausgeübt wird.

15. Verfahren nach einem der Ansprüche 1 bis 14, **dadurch gekennzeichnet, dass** an der die Materialstärkenverminderung (2) aufweisenden Seite des plattenförmigen Materials (1) nach dessen Umformung zu dem dreidimensionalen Objekt (11) eine versteifende Rückfläche (17) angebracht wird.

## Claims

1. A method for forming a plate-shaped material (1) into a three-dimensional object (11), wherein the material (1) is formed on a female part (4) by exerting pressure onto a side of the plate-shaped material (1), which faces away from the female part (4),
**characterized in**
**that** a reduction (2) of the material thickness is carried out in the plate-shaped material (1) in the areas thereof, which are to be formed, prior to the forming on the side, which faces away from the female part (4).

2. The method according to claim 1, **characterized in that** the reduction of the material thickness is carried out in a line-shaped manner and that the forming is or includes a bending of the material (1) along the line-shaped material thickness reduction (2).

3. The method according to claim 2, **characterized in that** the line-shaped material thickness reduction (2) is carried out along a plurality of lines.

4. The method according to claim 2 or 3, **characterized in that** the tine-shaped material thickness reduction (2) is carried out along a plurality of lines comprising different, non-parallel line directions.

5. The method according to any one of claims 2 to 4, **characterized in that** the line-shaped material thickness reduction (2) is carried out along a plurality of lines comprising different line directions, which converse and/or which intersect one another.

6. The method according to any one of claims 2 to 5, **characterized in that** the/each line-shaped material thickness reduction (2) is carried out in a continuously straight manner or in the form of straight sections having a different direction, which connect to one another.

7. The method according to any one of claims 2 to 6, **characterized in that** the/each line-shaped material thickness reduction (2) is carried out along lines, which run so as to be bent continuously or so as to be bent in sections.

8. The method according to any one of claims 1 to 7, **characterized in that** the reduction (2) of the material thickness is carried out in a line-shaped manner along a line, which is closed or which is closed while including a material edge (13), and that the forming is a flat back and forth pressing of the material (1) within the closed line.

9. The method according to any one of claims 1 to 8, **characterized in that** the forming is or includes an area by area round pressing of the material (1).

10. The method according to claim 9, **characterized in that** the round pressing of the material (1) is carried out in an outer material edge area (14).

11. The method according to any one of claims 1 to 10, **characterized in that** the reduction of the material thickness is carried out in a laminar manner as at least one recess (2') and **in that** the forming is or includes an embossing of the material (1) within the laminar recess (2').

12. The method according to any one of claims 1 to 11, **characterized in that** a metallic material or a plastic is used as plate-shaped material (1).

13. The method according to any one of claims 1 to 12, **characterized in that** the pressure for forming is exerted onto the plate-shaped material (1) by a male part (5).

14. The method according to any one of claims 1 to 13, **characterized in that** the pressure onto the side of the plate-shaped material (1), which faces away from the female part (4), is exerted in a mechanical or hydraulic press or by means of two rotatable rollers (8, 9) or by means of a fluid.

15. The method according to any one of claims 1 to 14, **characterized in that** a reinforcing rear surface (17) is attached to the side of the plate-shaped material (1), which encompasses the material thickness reduction (2), after the forming thereof into the three-dimensional object (11).

## Revendications

1. Procédé de transformation d'un matériau en forme de plaque (1) en un objet tridimensionnel (11), dans lequel le matériau (1) est transformé sur une matrice (4) par l'exercice d'une pression sur un côté du matériau en forme de plaque (1) détourné de la matrice (4),
**caractérisé en ce**
**qu'**une réduction (2) de l'épaisseur de matériau est effectuée dans le matériau en forme de plaque (1) dans ses régions à transformer avant la transformation sur le côté détourné de la matrice (4).

2. Procédé selon la revendication 1, **caractérisé en ce que** la réduction de l'épaisseur de matériau s'effectue de manière linéaire et que la transformation est ou inclut un pliage du matériau (1) le long de la réduction d'épaisseur de matériau linéaire (2).

3. Procédé selon la revendication 2, **caractérisé en ce que** la réduction d'épaisseur de matériau linéaire (2) est effectuée le long de plusieurs lignes.

4. Procédé selon la revendication 2 ou 3, **caractérisé en ce que** la réduction d'épaisseur de matériau linéaire (2) est effectuée le long de plusieurs lignes avec différentes orientations linéaires non parallèles.

5. Procédé selon l'une quelconque des revendications 2 à 4, **caractérisé en ce que** la réduction d'épaisseur de matériau linéaire (2) est effectuée le long de plusieurs lignes avec différentes orientations linéaires convergentes et/ou qui se croisent.

6. Procédé selon l'une quelconque des revendications 2 à 5, **caractérisé en ce que** la/chaque réduction d'épaisseur de matériau linéaire (2) est effectuée de manière rectiligne en continu ou sous la forme de sections rectilignes successives d'orientation différente.

7. Procédé selon l'une quelconque des revendications 2 à 6, **caractérisé en ce que** la/chaque réduction d'épaisseur de matériau linéaire (2) est effectuée le long de lignes courbées en continu ou s'étendant de manière courbée par section.

8. Procédé selon l'une quelconque des revendications 1 à 7, **caractérisé en ce que** la réduction (2) de l'épaisseur de matériau s'effectue de manière linéaire le long d'une ligne fermée en soi ou en incluant un bord de matériau (13) et que la transformation est une précompression ou un refoulement plan(e) du matériau (1) au sein de la ligne fermée.

9. Procédé selon l'une quelconque des revendications 1 à 8, **caractérisé en ce que** la transformation est ou inclut une compression rotative par région du matériau (1).

10. Procédé selon la revendication 9, **caractérisé en ce que** la compression rotative du matériau (1) est effectuée dans une région de bord de matériau extérieure (14).

11. Procédé selon l'une quelconque des revendications 1 à 10, **caractérisé en ce que** la réduction de l'épaisseur de matériau s'effectue de manière surfacique en tant qu'au moins un évidement (2') et que la transformation est ou inclut un estampage du matériau (1) au sein de l'évidement surfacique (2').

12. Procédé selon l'une quelconque des revendications 1 à 11, **caractérisé en ce qu'**un matériau métallique ou un plastique est utilisé en tant que matériau en forme de plaque (1).

13. Procédé selon l'une quelconque des revendications 1 à 12, **caractérisé en ce que** la pression pour la transformation est exercée par un poinçon (5) sur le matériau en forme de plaque (1).

14. Procédé selon l'une quelconque des revendications 1 à 13, **caractérisé en ce que** la pression sur le côté du matériau en forme de plaque (1) détourné de la matrice (4) est exercée dans une presse mécanique ou hydraulique ou par deux rouleaux rotatifs (8, 9) ou par un fluide.

15. Procédé selon l'une quelconque des revendications 1 à 14, **caractérisé en ce qu'**une surface arrière raidissante (17) est appliquée sur le côté du matériau en forme de plaque (1) présentant la réduction d'épaisseur de matériau (2) après sa transformation en l'objet tridimensionnel (11).
